# EUROPÄISCHE PATENTSCHRIFT

(11) **EP 1 750 541 B1**
(45) Veröffentlichungstag und Bekanntmachung des Hinweises auf die Patenterteilung: **20.08.2014**
(21) Anmeldenummer: 05751165.1
(22) Anmeldetag: 21.05.2005
(51) Int. Cl.: A46B 7/02

(54) **BÜRSTENKOPF FÜR ELEKTRISCHE UND/ODER MANUELLE ZAHNBÜRSTEN**
BRUSH HEAD FOR ELECTRIC AND/OR MANUAL TOOTHBRUSHES
TETE DE BROSSE POUR BROSSE A DENTS ELECTRIQUE ET/OU MANUELLE

(30) Priorität: 29.05.2004 DE 102004026461
(43) Veröffentlichungstag der Anmeldung: 14.02.2007
(73) Patentinhaber: Braun GmbH, 61476 Kronberg (DE)
(72) Erfinder: KUNATH, Ivo, 61476 Kronberg (DE); DRIESEN, Georges, 61276 Weilrod (DE); FRITSCH, Thomas, 65817 Eppstein (DE); SCHWARZ-HARTMANN, Armin, 55234 Wendelsheim (DE)
(74) Vertreter: Töpert, Verena Clarita
(86) Internationale Anmeldenummer: PCT/EP2005/005538
(87) Internationale Veröffentlichungsnummer: WO 2005/115196

(56) Entgegenhaltungen:
- DE-A1- 10 164 336
- FR-A- 936 529
- US-A- 2 139 245
- US-A- 5 735 011
- US-A1- 2004 177 462

## Beschreibung

Die Erfindung betrifft einen Bürstenkopf, der einen Borstenträger aufweist, an dem Borsten und ein elastisches Element befestigt sind.

Aus der FR 936 529 ist eine elektrische Zahnbürste mit einem Bürstenkopf bekannt, der Borsten und einen Behälter für ein Zahnfleischkräftigungsmittel aufweist.

Aus der DE 101 64 336 ist eine Zahnbürste mit einem Handgriff und einem Kopfteil bekannt, an dem ein weichelastisches Reinigungselement angeordnet ist, das über ein Trägerelement am Kopfteil befestigt ist. Trägerelement und Kopfteil bestehen aus demselben Kunststoff.

Der Erfindung liegt die Aufgabe zugrunde, einen Bürstenkopf anzugeben, bei dem ein elastisches Element in einer Weise mit einem Borstenträger verbunden ist, die eine kompakte Bauform ermöglicht.

Diese Aufgabe wird erfindungsgemäß dadurch gelöst, daß das elastische Element über ein Tragelement mit dem Borstenträger verbunden ist, wobei der Borstenträger in an sich bekannter Weise aus einem ersten Kunststoff mit hoher Verschleißfestigkeit, hoher Schlagzähigkeit, hoher mechanischer Festigkeit, hoher Formstabilität und chemischer Beständigkeit besteht, beispielsweise aus Polyoxymethylen (POM). Das Tragelement besteht aus einem zweiten Kunststoff, beispielsweise aus Polypropylen (PP). Das elastische Element besteht aus einem dritten Kunststoff, beispielsweise einem thermoplastischen Elastomer (TPE).

Durch diese Materialwahl in Kombination mit der erfindungsgemäßen Ausgestaltung des Bürstenkopfes kann ein zahnfleisch- und zahnschonendes, d.h. relativ weiches, Material für das elastische Element vorgesehen werden. Es lassen sich auch elastische Materialien mit relativ niedriger Shore Härte verwenden. Allerdings lassen sich derartige sehr weiche Materialien nicht dauerhaft formschlüssig mit einem Borstenträger aus Polyoxymethylen verbinden, sondern nur mit einem Borstenträger aus Polypropylen. Dieses Material ist aber für Borstenträger, insbesondere bei einem oszillierenden Bürstenkopf, ungeeignet. Die zu geringe Schlagzähigkeit, die die Auszugskräfte der Borsten herabsetzen würde, wäre nachteilig. Um diesen Nachteil zu beseitigen, müßte die Beborstungstiefe erheblich erhöht werden, was die Dicke des Borstenträgers wesentlich erhöhen würde.

Für das Tragelement, das das elastische Element mit dem Borstenträger verbindet, wird vorzugsweise Polypropylen eingesetzt, weil sich ein Tragelement aus diesem Kunststoff leicht an einem Borstenträger aus Polyoxymethylen befestigen läßt, und auch gut und dauerhaft stoffschlüssig mit einem Element aus einem weichelastischen Kunststoff, beispielsweise einem thermoplastischen Polymer, verbinden läßt. Eine stoffschlüssige Verbindung hat gegenüber einer Formschlußverbindung den Vorteil einer kompakten Bauform. Das Tragelement wird vorzugsweise zentrisch im Bürstenkopf unterhalb des elastischen Elements befestigt.

Nach einer bevorzugten Ausgestaltung der Erfindung ist vorgesehen, daß der Borstenträger aus einer Bürstenscheibe mit einer ovalen oder runden Form besteht, wobei Borstenbüschel am Borstenträger befestigt und um einen elastischen Behälter herum angeordnet sind, der zum Aufnehmen einer Reinigungs- und/oder -pflegesubstanz für Mund, Zähne und/oder Zahnfleisch dient. Durch diese Maßnahme wird insbesondere ein guter Einsatz einer Zahnpflegesubstanz, beispielsweise eines Mittels zum Weißen der Zähne, und eine gute Reinigungswirkung durch die Borsten erreicht, insbesondere bei einer oszillierend-rotierenden Bewegung des Borstenträgers. Der elastische Behälter ist zur Aufnahme der Reinigungs- und/oder -pflegesubstanz zu einer Zahnputzseite hin offen.

Zweckmäßigerweise ist das Tragelement zentrisch in einer Vertiefung auf einer Beborstungsseite des Borstenträgers angebracht, wobei das Tragelement eine Verankerung für den elastischen Behälter bildet. Dadurch wird eine sehr kompakte Bauform des Bürstenkopfs ereicht, der kaum größer als ein normaler Bürstenkopf ist.

Das Tragelement kann mit dem Borstenträger auf verschiedene Art verbunden werden, beispielsweise formschlüssig durch am Borstenträger vorhandene Durchgangslöcher oder Einklipsen des Tragelements in den Borstenträger, oder.stoffschlüssig, beispielsweise durch Ultraschallschweißen.

Der elastische Behälter wird mit dem Tragelement vorzugsweise stoffschlüssig verbunden. Von Vorteil ist es, wenn der Behälter eine auf seiner Unterseite eine zentrische Vertiefung aufweist und eine korrespondierende Erhöhung am Tragelement ausgebildet ist, da sich durch diese Formgebung die Verbindungsfläche zwischen beiden Teilen erhöht, was die Festigkeit der stoffschlüssigen Verbindung verbessert. Die Vertiefung ist beispielsweise kegelstumpfförmig ausgebildet.

Sehr günstig ist es, um ein optimales Putzergebnis zu erreichen, wenn der Borstenträger verschiedenartige Borstenbüschel aufweist, die sich beispielsweise in ihrer Borstenanzahl und/oder Borstenanordnung und/oder Geometrie (entsprechend den im Borstenträger vorhandenen Vertiefungen zum Befestigen der Borstenbüschel) und deren Borsten sich beispielsweise in ihrer Länge, Durchmesser, Härte und/oder Material unterscheiden.

Die Erfindung sowie deren Vorteile werden nachfolgend anhand von Ausführungsbeispielen für erfindungsgemäße Bürstenköpfe erläutert, die in den Figuren dargestellt sind. Es zeigt:
- Fig. 1: eine Schnittdarstellung einer Aufsteckbürste mit einem erfindungsgemäßen Bürstenkopf, und
- Fig. 2: eine schematische Darstellung eines erfindungsgemäßen Bürstenkopfs von der Borstenseite gesehen.

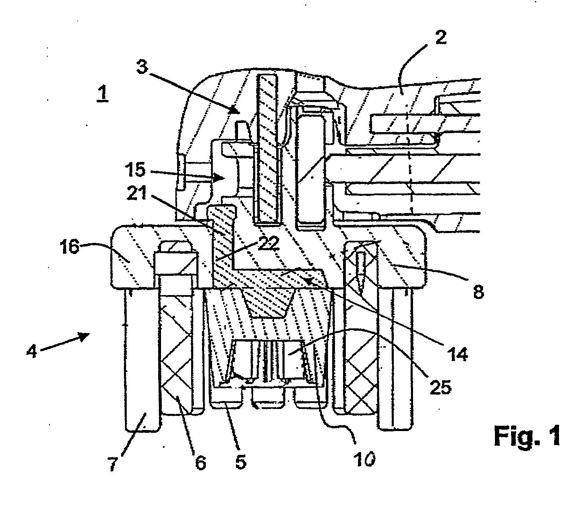

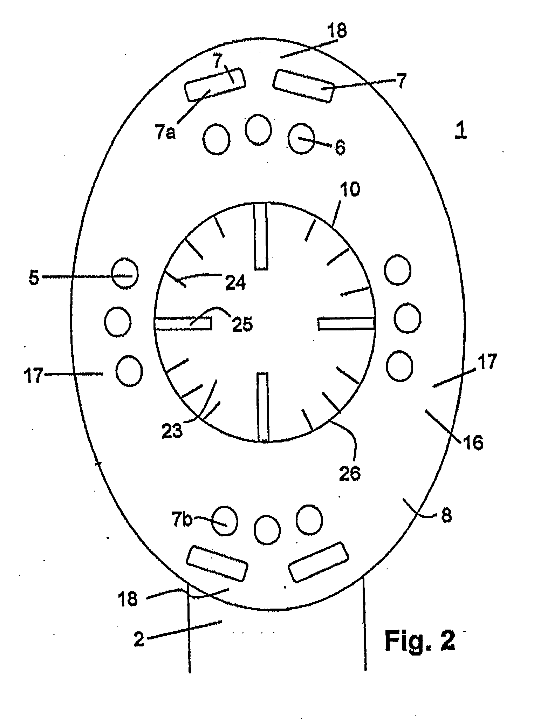

Die in Figur 1 dargestellte Aufsatzbürste 1 umfaßt einen Bürstenschaft 2, eine Antriebsmechanik 3, mit der eine oszillierend-rotierende Antriebsbewegung auf einen Bürstenkopf 4 übertragen wird. Der Bürstenkopf trägt einen Borsten 5 bis 7 bzw. Borstenbüschel tragenden Borstenträger 8, in dem die Büschel in Vertiefungen befestigt sind. Innerhalb eines Borstenbereichs 9 (vgl. Fig. 2) ist ein elastisches Element 10 in Form eines Behälters angeordnet, der für die Aufnahme von Mundpflegesubstanzen, zum Beispiel Zahnpasta oder Mittel zum Weißen der Zähne oder dergleichen dient.

Der Borstenträger 8 besteht aus einem verschleißfesten Material, vorzugsweise Polyoxymethylen, und umfaßt eine Lagerung 15 im Bürstenkopfs 4. Die Lagerung 15 ist bei dieser Materialwahl auch nach langer Benutzung des Bürstenkopfs 4 funktionsfähig. Der Bürstenschaft 2 besteht vorzugsweise auch aus Polyoxymethylen. Die Dicke einer Bürstenscheibe 16 des Borstenträgers 8 ist relativ gering, vorzugsweise beträgt sie 2,5 mm bis 3,5 mm, insbesondere etwa 3 mm. Die Borsten 5 bis 7 sind etwa 2 mm tief in der Bürstenscheibe 16 eingelassen, was bei dieser Materialwahl ausreichend ist.

Ein Tragelement 14 besteht vorzugsweise aus Polypropylen. Der Behälter 10 besteht aus einem thermoplastischen Elastomer und ist mit dem Tragelement 14 stoffschlüssig verbunden.

Wie in Figur 2 erkennbar ist, besitzt der Borstenträger 8 eine ovale Form. Eine runde oder eine andere Form ist auch möglich. Die Borsten bzw. Borstenbüschel 5 - 7 sind am Borstenträger 8 befestigt und um den elastischen Behälter 10 herum angeordnet. Die Borsten können mehr oder weniger über den elastischen Behälter 10 hinausragen, vgl. Fig. 1. Die in Bereichen 17 der kleineren Halbachse des Ovals angeordneten Borsten bzw. Borstenbüschel 5 sind relativ kurz, wobei die Büschel einen runden Querschnitt aufweisen. Die in Bereichen 18 der größeren Halbachse angeordneten Borstenbüschel weisen entweder einen runden 6 oder länglichen 7 Querschnitt auf. Die dem Bürstenschaft 2 ferneren Borsten 7a können etwas länger sein als die schaftnahen Borsten 7b.

Der Borstenträger 8 kann auch mit verschiedenartigen Borstenarten versehen sein, die sich in ihrer Länge, Durchmesser, Härte und/oder Material unterscheiden. Die Borstenbüschel können sich in ihrer Borstenanzahl und/oder -anordnung und/oder Geometrie unterscheiden.

Fig. 1 zeigt, daß das Tragelement 14 für den elastischen Behälters 10 zentrisch in einer Vertiefung 20 auf einer Beborstungsseite des Borstenträgers 8 eingebracht ist. Das Tragelement 14 ist formschlüssig durch Verbindungsfinger 22 mit dem Borstenträger 8 verbunden, der entsprechende Durchgangslöcher 21 aufweist. Das Ende des Verbindungsfingers 22 besitzt einen größeren Querschnitt, so daß beide Teile miteinander fest verbunden sind. Möglich sind auch andere Formschlußverbindungen oder eine Form-Kraftschlußverbindung oder eine Einklipsverbindung.

Der elastische Behälter 10 ist zur Zahnputzseite hin offen, und dient zur Aufnahme einer Mund- oder Zahnpflegesubstanz oder einem Zahnweißmittel oder ähnlichem. Damit das Mittel besser am elastischen Behälter 10 haftet, sind nach innen gerichtete Rippen 24, 25 an einer vorzugsweise runden Außenwand 26 des elastischen Behälters 10 angeformt. Beispielsweise sind vier fadenkreuzförmig angeordnete lange Rippen 25, und zwölf kurze Rippen 24 vorhanden.

Der elastische Behälter 10 weist auf seiner Unterseite eine zentrische Vertiefung auf. Am Tragelement 14 ist eine korrespondierende Erhöhung ausgebildet. Die Vertiefung ist kegelstumpfförmig ausgebildet.

Die Erfindung ist nicht nur auf die dargestellten Ausführungsformen beschränkt. Sie umfaßt auch gleichwirkende Ausführungsformen im Sinne der erfinderischen Lehre. Beispielsweise können vergleichbare Materialien eingesetzt werden oder eine andere Gestaltung des Bürstenkopfs oder des elastischen Elements vorgesehen sein. Beispielsweise kann das elastische Element auch als stabförmiges Massageelement ausgebildet sein.

### Liste der Bezugszeichen:

- 1: Aufsatzbürste
- 2: Bürstenschaft
- 3: Antriebsmechanik
- 4: Bürstenkopf
- 5-7: Borsten
- 8: Borstenträger
- 9: -
- 10: elastisches Element / Behälter
- 11: -
- 12: -
- 13: -
- 14: Tragelement
- 15: Lagerung
- 16: Bürstenscheibe
- 17: erster Bereich
- 18: zweiter Bereich
- 19: -
- 20: -
- 21: Durchgangslöcher
- 22: Verbindungsfinger
- 23: -
- 24: Rippen (klein)
- 25: Rippen (groß)
- 26: Außenwand

## Patentansprüche

1. Bürstenkopf (4) für eine elektrische und/oder manuelle Zahnbürste, der einen Borstenträger (8) aufweist, an dem Borsten (5, 6, 7) und ein elastisches Element (10) befestigt sind, wobei das elastische Element über ein Tragelement (14) mit dem Borstenträger verbunden ist,
**dadurch gekennzeichnet,**
**daß** der Borstenträger (8) aus einem ersten Kunststoff, das Tragelement (14) aus einem zweiten Kunststoff und das elastische Element (10) aus einem dritten Kunststoff bestehen, und wobei die Kunststoffe unterschiedlich sind.

2. Bürstenkopf nach Anspruch 1,
**dadurch gekennzeichnet,**
**daß** der Borstenträger (8) beispielsweise aus Polyoxymethylen besteht.

3. Bürstenkopf nach Anspruch 1 oder 2,
**dadurch gekennzeichnet,**
**daß** das Tragelement (14) beispielsweise aus Polypropylen besteht.

4. Bürstenkopf nach Anspruch 1, 2 oder 3
**dadurch gekennzeichnet,**
**daß** das elastische Element (10) beispielsweise aus einem thermoplastischen Elastomer besteht.

5. Bürstenkopf nach Anspruch 3 oder 4,
**dadurch gekennzeichnet,**
**daß** das elastische Element (10) mit dem Tragelement (14) stoffschlüssig verbunden ist.

6. Bürstenkopf nach einem der vorhergehenden Ansprüche,
**dadurch gekennzeichnet,**
**daß** das Tragelement (14) kraft- und/oder formschlüssig mit dem Borstenträger (8) verbunden ist, beispielsweise durch eine Einklipsverbindung.

7. Bürstenkopf nach Anspruch 6,
**dadurch gekennzeichnet,**
**daß** das Tragelement (14) durch Verbindungsfinger (22) mit dem Borstenträger (8) verbunden ist, der entsprechende Durchgangslöcher (21) aufweist.

8. Bürstenkopf nach einem der vorhergehenden Ansprüche,
**dadurch gekennzeichnet,**
**daß** das elastische Element (10) als Behälter zur Aufnahme einer Reinigungs- und/oder Pflegesubstanz für Mund, Zähne und/oder Zahnfleisch ausgebildet ist, der zu einer Zahnputzseite hin offen ist.

9. Bürstenkopf nach Anspruch 8,
**dadurch gekennzeichnet,**
**daß** der Behälter (10) an einer Innenseite einer Wand mit Rippen (24, 25) versehen ist.

10. Bürstenkopf nach Anspruch 9,
**dadurch gekennzeichnet,**
**daß** die Rippen (24, 25) unterschiedlich lang ausgebildet sind.

11. Bürstenkopf nach einem der vorhergehenden Ansprüche,
**dadurch gekennzeichnet,**
der Borstenträger (8) verschiedenartige Borstenbüschel aufweist, die sich beispielsweise in ihrer Borstenanzahl und/oder Borstenanordnung und/oder Geometrie und deren Borsten sich beispielsweise in ihrer Länge und/oder Durchmesser und/oder Härte und/oder Material unterscheiden.

12. Elektrische Zahnbürste mit einem Bürstenkopf nach einem der vorhergehenden Ansprüche.

13. Manuelle Zahnbürste mit einem Bürstenkopf nach einem der Ansprüche 1-11.

14. Aufsteckbürste für eine elektrische und/oder manuelle Zahnbürste mit einem Bürstenkopf nach einem der Ansprüche 1-11.

## Claims

1. Brush head (4) for an electric and/or manual toothbrush that has a bristle carrier (8) on which are attached bristles (5, 6, 7) and an elastic element (10), wherein the elastic element is joined with the bristle carrier via a support element (14),
**characterized in that**
the bristle carrier (8) comprises a first plastic, the support element (14) comprises a second plastic, and the elastic element (10) comprises of a third plastic, and wherein the plastics are different.

2. Brush head according to Claim 1,
**characterized in that**
the bristle carrier (8) comprises, for example, polyoxymethylene.

3. Brush head according to Claim 1 or 2,
**characterized in that**
the support element (14) comprises, for example, polypropylene.

4. Brush head according to Claim 1, 2, or 3
**characterized in that**
the elastic element (10) comprises, for example, a thermoplastic elastomer.

5. Brush head according to Claim 3 or 4,
**characterized in that**
the elastic element (10) is joined with the support element (14) via bonding.

6. Brush head according to any of the preceding Claims,
**characterized in that**
the support element (14) is joined by forced engagement or by form-interlocking engagement with the bristle carrier (8), for example via a clip connection.

7. Brush head according to Claim 6,
**characterized in that**
the support element (14) is connected via connection fingers (22) with the bristle carrier (8), which has corresponding throughholes (21).

8. Brush head according to any of the preceding Claims,
**characterized in that**
the elastic element (10) is designed as a container to receive a cleaning and/or care substance for the mouth, teeth and/or gums, which container is open to the dental cleaning side.

9. Brush head according to Claim 8,
**characterized in that**
the container (10) is provided on one inner side of a wall with ribs (24, 25).

10. Brush head according to Claim 9,
**characterized in that**
the ribs (24, 25) are formed to have different lengths.

11. Brush head according to any of the preceding Claims,
**characterized in that**
the bristle carrier (8) has different types of bristle tufts that differ, for example, in their bristle count and/or bristle arrangement and/or geometry and whose bristles differ, for example, in their length and/or diameter and/or hardness and/or material.

12. Electric toothbrush with a brush head according to any of the preceding Claims.

13. Manual toothbrush with a brush head according to any of the Claims 1 to 11.

14. Brush attachment for an electric and/or manual toothbrush with a brush head according to any of the Claims 1 to 11.

## Revendications

1. Tête (4) de brosse pour une brosse à dents électrique et/ou manuelle, qui présente un support à poils (8), sur lequel sont fixés des poils (5, 6, 7) et un élément élastique (10), l'élément élastique étant relié au support à poils par un élément support (14),
**caractérisée en ce que**
le support à poils (8) est constitué par un premier matériau synthétique, l'élément support (14) est constitué par un deuxième matériau synthétique et l'élément élastique (10) est constitué par un troisième matériau synthétique et où les matériaux synthétiques sont différents.

2. Tête de brosse selon la revendication 1,
**caractérisée en ce que**
le support à poils (8) est par exemple en polyoxyméthylène.

3. Tête de brosse selon la revendication 1 ou 2,
**caractérisée en ce que**
l'élément support (14) est par exemple en polypropylène.

4. Tête de brosse selon la revendication 1, 2 ou 3,
**caractérisée en ce que**
l'élément élastique (10) est par exemple en un élastomère thermoplastique.

5. Tête de brosse selon la revendication 3 ou 4,
**caractérisée en ce que**
l'élément élastique (10) est relié à l'élément support (14) par liaison de matière.

6. Tête de brosse selon l'une des revendications précédentes,
**caractérisée en ce que**
l'élément support (14) est relié à force et/ou par complémentarité de forme au support à poils (8), par exemple par une liaison par clipsage.

7. Tête de brosse selon la revendication 6,
**caractérisée en ce que**
l'élément support (14) est relié par des doigts de liaison (22) au support à poils (8) qui présente des trous de passage correspondants (21).

8. Tête de brosse selon l'une des revendications précédentes,
**caractérisée en ce que**
l'élément élastique (10) est conçu comme récipient pour recevoir une substance de nettoyage et/ou de soin pour la bouche, les dents et/ou la gencive, qui est ouvert vers une face de nettoyage des dents.

9. Tête de brosse selon la revendication 8,
**caractérisée en ce que**
le récipient (10) est pourvu de nervures (24, 25) sur une face interne d'une paroi.

10. Tête de brosse selon la revendication 9,
**caractérisée en ce que**
les nervures (24, 25) sont conçues de longueurs différentes.

11. Tête de brosse selon l'une des revendications précédentes,
**caractérisée en ce que**
le support à poils (8) présente différentes touffes de poils qui se distinguent par exemple par leur nombre de poils et/ou la disposition de leurs poils et/ou leur géométrie et dont les poils se distinguent par exemple par leur longueur et/ou leur diamètre et/ou leur dureté et/ou leur matériau.

12. Brosse à dents électrique équipée d'une tête de brosse selon l'une des revendications précédentes.

13. Brosse à dents manuelle équipée d'une tête de brosse selon l'une des revendications 1 à 11.

14. Brosse enfichable pour une brosse à dents électrique et/ou manuelle présentant une tête de brosse selon l'une des revendications 1 à 11.
